# EUROPEAN PATENT SPECIFICATION

(11) **EP 1 674 362 B1**
(45) Date of publication and mention of the grant of the patent: **01.10.2008**
(21) Application number: 05022371.8
(22) Date of filing: 13.10.2005
(51) Int. Cl.: B60T 8/26, B60T 8/32

(54) **Motorcycle braking device**
Motorrad-Bremsvorrichtung
Dispositif de freinage pour motocyclette

(30) Priority: 24.12.2004 JP 2004374104
(43) Date of publication of application: 28.06.2006
(73) Proprietor: HONDA MOTOR CO., LTD., Tokyo (JP)
(72) Inventor: Nakayama, Masanobu, 4-1, Chuo 1-chome, Wako-shi, Saitama (JP); Takenouchi, Kazuya, 4-1, Chuo 1-chome, Wako-shi, Saitama (JP); Tani, Kazuhiko, 4-1, Chuo 1-chome, Wako-shi, Saitama (JP)
(74) Representative: Rupp, Christian

(56) References cited:
- EP-A- 0 518 375
- US-A- 5 620 237
- US-A1- 2004 046 444
- US-B1- 6 409 285

## Description

The present invention relates to a motorcycle braking device.

In some motorcycle braking devices, the wheel braking means for the rear wheel works in conjunction with brake operation for the front wheel. For example, when a front wheel brake lever is operated, a braking pressure is applied to a front wheel brake caliper through a master cylinder and some of the pressure applied to the master cylinder is also applied to a rear wheel brake caliper by a proportioning valve to brake the rear wheel (see Patent Document 1).
[Patent Document 1] JP-A No. 368267/1992

US 2004/046444 discloses a motorcycle device and is considered the closest prior art.

The conventional motorcycle braking devices as mentioned above have the following problem: since front and rear braking pressures are uniquely determined by proportioning valve characteristics, if a brake system which controls the slip ratio with respect to the road surface resulting from brake operation (ABS: Anti Lock Brake System, hereinafter called "ABS") is adopted and the ABS for the front wheel is active in brake operation for the front wheel, the tire's vertical load decreases on the rear wheel side to a larger extent than on the front wheel side and thus the brake feeling is unfavorably affected.

Therefore, the present invention has an object to provide a motorcycle braking device which adopts a front-rear interlocking brake system and assures a better motorcycle brake feeling.

The invention is solved by the features of claims 1 and 2 and the method steps of claims 5 and 6.

In order to solve the above problem, the invention is characterized in that in a motorcycle braking device in which a wheel braking means for a rear wheel (for example, rear wheel brake caliper 4 in an embodiment) works in conjunction with brake operation for a front wheel, when the braking pressure of a wheel braking means for the front wheel (for example, front wheel brake caliper 4 in the embodiment) interlocked with a front wheel brake controller (for example, front wheel brake controller 2 in the embodiment) is gradually increased, the braking pressure allocated to the wheel braking means for the rear wheel is gradually increased and then decreased and finally whether a given braking pressure (for example, braking pressure Pe in the embodiment) is left or not is controlled by electrical switching.
In this constitution, an adequate braking pressure is ensured by the wheel braking means for the rear wheel which works in conjunction with brake operation for the front wheel until brake operation for the front wheel is ended.

The invention is also characterized in that in a motorcycle braking device in which a wheel braking means for a rear wheel works in conjunction with brake operation for a front wheel and the ABS is equipped, when the ABS is active on the side of the front wheel which is braked by operation of a front wheel brake controller, the braking pressure ratio between the wheel braking means for the front wheel and the wheel braking means for the rear wheel is different from that when the ABS is inactive.
In this constitution, the braking pressure of the wheel braking means for the front wheel and the rear wheel is set to an adequate level when the vertical load of the rear wheel decreases to a larger extent than that of the front wheel.

The invention is also characterized in that when the ABS is active on the front wheel side, the braking pressure of the wheel braking means for the rear wheel is higher than when the ABS is inactive.
In this constitution, the braking pressure on the rear wheel side is increased to raise the rear wheel braking pressure.
The invention is also characterized in that the pressure of the master cylinder (for example, master cylinder 3 in the embodiment) interlocked with the brake controller is detected by a sensor (for example, pressure sensor 28 in the embodiment) and a fluid pressure applied to the wheel braking means is electrically adjusted according to the detected pressure.
In this constitution, the fluid pressure can be electrically adjusted freely so that the braking forces on the front and rear wheels can be switched or concurrently applied easily in the ABS or front-rear interlocking brake system.

According to the invention, an adequate braking pressure is ensured by the wheel braking means for the rear wheel which works in conjunction with brake operation for the front wheel until brake operation for the front wheel is ended. Therefore, there is an effect that a good brake feeling is assured when the vertical load of the rear wheel tends to decrease to a larger extent.

According to the invention, the braking pressure of the wheel braking means for the front wheel and the rear wheel can be set to an adequate level when the vertical load of the rear wheel decreases to a larger extent than that of the front wheel. Therefore, there is an effect that a good brake feeling is assured.

According to the invention, since the braking pressure on the rear wheel side is increased to raise the rear wheel braking pressure, there is an effect that a good brake feeling is ensured when the rear wheel vertical load tends to decrease to a larger extent.
According to the invention, there is an effect that by electrically adjusting the fluid pressure freely, the braking forces on the front and rear wheels can be switched or concurrently applied easily in the ABS or front-rear interlocking brake system.
Fig. 1 is a diagram of fluid pressure circuits of a motorcycle braking device according to an embodiment of the present invention.
Fig. 2 is a diagram of the fluid pressure circuits of Fig. 1 where braking is under way and the ABS is active for the front wheel.
Fig. 3 is a flowchart.
Fig. 4 is a graph which shows the relation between the front wheel master cylinder pressure and the rear wheel brake caliper pressure.
Fig. 5 is a graph which shows change in the estimated vehicle speed etc. when the ratio of the rear wheel brake caliper pressure to the front wheel master cylinder pressure is changed under ABS control.
Fig. 6 is a graph which shows change in the estimated vehicle speed etc. when the ratio of the rear wheel brake caliper pressure to the front wheel master cylinder pressure is not changed under ABS control.

Next, an embodiment of the present invention will be described referring to the accompanying drawings.

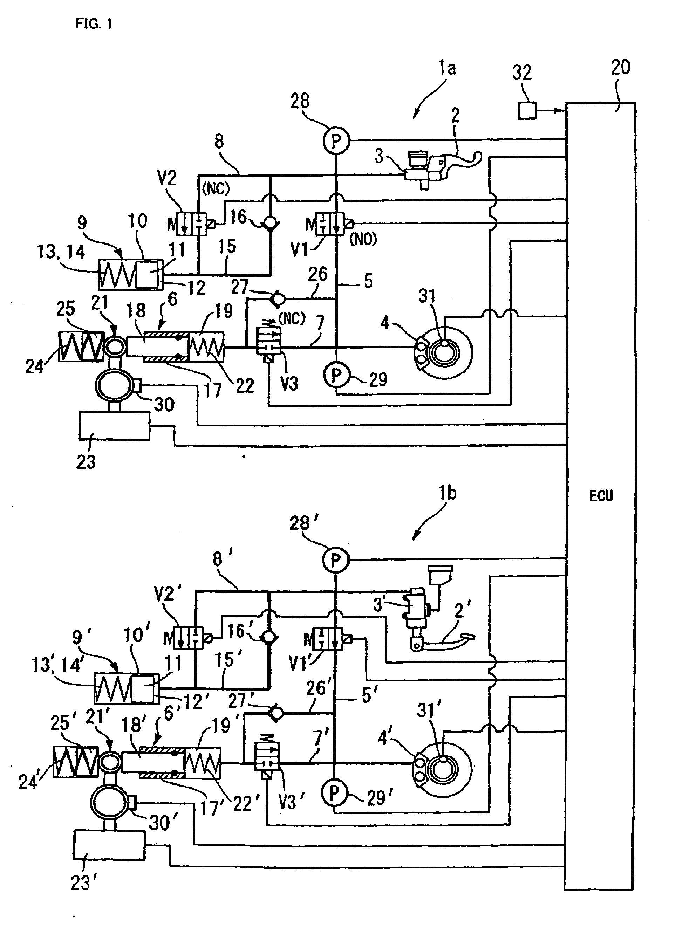

Fig. 1 is a hydraulic circuit diagram of a motorcycle braking device according to an embodiment of the present invention. As shown in the figure, the braking device in this embodiment consists of a front wheel brake circuit 1a and a rear wheel brake circuit 1b which are independent from each other and connected via a controller (ECU) 20.

The front wheel brake circuit 1a and the rear wheel brake circuit 1b are structurally almost the same except that for,brake control, the front wheel brake circuit 1a relies on a brake lever as a brake controller 2 and the rear wheel brake circuit 1b relies on a brake pedal as a brake controller 2'. Therefore, only the front wheel brake circuit 1a will be described in detail and the same elements of the rear wheel brake circuit 1b as those of the front wheel brake circuit 1a are designated by the same reference numerals and their descriptions are omitted.

This braking device employs a by-wire system for both the front and rear wheels where the amount of operation (fluid pressure in this embodiment) through a brake controller such as the brake lever is electrically detected and a fluid pressure which is produced by a hydraulic modulator according to the detected value is used to generate a braking force.
This braking device also employs a brake system in which, when either of the front wheel and rear wheels is braked, the front and rear wheel braking means work in conjunction with each other for braking operation (CBS: Combined Brake System, hereinafter called "CBS").

Concretely, in the brake circuit which has been operated first with the brake controller 2,2', based on the master cylinder fluid pressure, the fluid pressure given by the hydraulic modulator works on the brake caliper in the circuit operated first in accordance with the by-wire method; and also in the brake circuit operated later, based on the master cylinder pressure in the brake circuit operated first, the fluid pressure given by the hydraulic modulator works on the brake caliper in accordance with the by-wire method.
Furthermore, this braking device also employs the ABS.

The brake circuits 1a and 1b each consist of a master cylinder 3,3', interlocked with the brake controller 2,2', and a brake caliper 4,4' matched to the master cylinder 3,3', which are connected by a main brake passage 5,5'. Midway on the main brake passage 5,5', a hydraulic modulator 6,6' (explained later) is joined and connected to it through a supply-drain passage 7,7'.

On the main brake passage 5's,5's portion up to the master cylinder 3,3' from the point where it joins the supply-drain passage 7,7', a normally-open type (NO) first electromagnetic valve V1,V1', which connects or disconnects the master cylinder 3,3' and the brake caliper 4,4' is inserted and a branch passage 8,8' is connected. This branch passage 8,8' is connected through a normally-closed type (NC) second electromagnetic valve V2,V2' to a fluid loss simulator 9,9' which applies a virtual hydraulic reaction force to the master cylinder 3,3' according to the amount of operation of the brake controller 2,2' when the above first electromagnetic valve V1,V1' closes the main brake passage 5,5'. When a reaction force is applied, this second electromagnetic valve V2,V2' opens the branch circuit 8,8' to connect the master cylinder 3,3' and the fluid loss simulator 9,9'.

The above fluid loss simulator 9,9' is structured as follows: a piston 11,11' is housed in a cylinder 10,10' in a way to move forward and backward freely and between the cylinder 10,10' and the piston 11,11' there is a fluid chamber 12,12' which receives working fluid flowing from the master cylinder 3,3', where a coil spring 13,13' and a resin spring 14,14', different in characteristics, are connected in series behind the piston 11,11' and these two springs, coil spring 13,13' and resin spring 14,14', give the piston 11,11' (brake controller 2,2') a reaction force which gradually rises and sharply rises at a stroke end.
In the above branch passage 8,8' there is a bypass passage 15,15' which gets around the second electromagnetic valve V2,V2' and in this bypass passage 15,15' there is a return check valve 16,16' which permits flow of working fluid from the fluid loss simulator 9,9' toward the master cylinder 3,3'.

The above hydraulic modulator 6,6' includes: a cam mechanism 21,21' which presses a piston 18,18' in a cylinder 17,17' toward a hydraulic chamber 19,19' formed between the cylinder 17,17' and the piston 18,18'; a return spring 22,22' which constantly presses the piston 18,18' against the cam mechanism 21,21'; and an electric motor 23,23' which drives the cam mechanism 21,21', with the hydraulic chamber 19,19' connected to the above supply-drain passage 7,7'. By pressing the piston 18,18' with respect to an initial position of the cylinder 17,17' through the cam mechanism 21,21' driven by the electric motor 23,23' or moving the piston 18,18' back through the return spring 22,22', this hydraulic modulator 6,6' increases or decreases the pressure in the hydraulic chamber 19,19' and thereby increases or decreases the braking pressure of the brake caliper 4,4'.
By adjusting the electric current value determined by an input duty ratio (ON time/ON time + OFF time) through PWM control of the electric motor 23,23', the position of the piston 18,18', which depends on the rotational position of the cam mechanism 21,21', is electrically adjusted accurately and easily to adjust the pressure in the hydraulic chamber 19,19'.

In the above cam mechanism 21,21', a lifter 25,25' whose stroke is limited by a stopper (not shown) through a backup spring 24,24' is disposed in a way to move forward and backward freely and the piston 18,18' is constantly pressed by this lifter 25,25' toward the direction in which the hydraulic chamber 19,19' is reduced. Consequently, when the electric motor 23,23' is turned off, the lifter 25,25' is pressed by the backup spring 24,24' and stopped by the stopper so that the piston 18,18' returns to the initial position.
Thus, it is possible to perform both CBS control which actively supplies working fluid to the main brake passage 5,5' (brake caliper 4,4') and ABS control which moves the piston 18,18' forward and backward to decrease, hold or again increase the pressure in the hydraulic chamber 19,19'.

A third normally-closed type (NC) valve V3,V3' is inserted in the supply-drain passage 7,7'. In the supply-drain passage 7,7' there is a bypass passage 26,26' which gets around the third electromagnetic valve V3,V3' and in this bypass passage 26,26' there is a return check valve 27,27' which permits flow of working fluid from the hydraulic modulator 6,6' toward the brake caliper 4,4'.

In the front wheel brake circuit 1a and the rear wheel brake circuit 1b, on the input side, or in the portion from the first electromagnetic valve V1,V1' up to the master cylinder 3,3', there is a pressure sensor (P) 28,28' and, on the output side, or in the portion up to the brake caliper 4,4', there is a pressure sensor (P) 29,29'. The cam shaft (not shown) of the cam mechanism 21,21' has an angle sensor 30,30' for angle information feedback and the brake caliper 4,4' has a wheel speed sensor 31,31' for detecting the wheel speed. Also, a mode select switch 48 is provided to enable the rider to select the control mode manually and if the rider desires CBS control, he/she uses it to select the CBS control mode. The following explanation is based on the assumption that CBS control is selected.

The controller 20 opens or closes the first electromagnetic valve V1,V1', second electromagnetic valve V2,V2', and third electromagnetic valve V3,V3' according to detection signals from the pressure sensors 28,28' and 29,29', a detection signal from the angle sensor 30,30' and a detection signal from the wheel speed sensor 31,31', and controls operation of the electric motor 23,23'.

Concretely, when one brake controller 2,2' is operated, the speed of the front/rear wheel is inputted from the wheel speed sensor 31,31' to the controller 20 and information on the amount of brake operation, etc. is inputted through the pressure sensor 28,28' to the controller 20, and according to an instruction from the controller 20, the first electromagnetic valves V1,V1' in both the brake circuits are held so as to close the main brake passages 5,5' and at the same time the electromagnetic valves V2,V2' and V3,V3' are held open and both the hydraulic modulators 6,6' supply a fluid pressure depending on the vehicle driving condition and brake operation, to the respective brake calipers 4,4'.

The controller 20 sets whichever is higher between the wheel speed detected by the front wheel speed sensor 31 and that by the rear wheel speed sensor 31', as an estimated vehicle speed; and the front wheel's slip ratio or the rear wheel's slip ratio is calculated according to difference between the estimated vehicle speed and the front or rear wheel speed. If the front wheel's slip ratio or rear wheel's slip ratio exceeds a predetermined slip ratio threshold, it is decided that a wheel slip has occurred and ABS control begins to reduce the fluid pressure of the hydraulic modulator 6,6'.

In the above constitution, when the vehicle is at a stop (vehicle speed=0), as shown in Fig. 1, in the front wheel brake circuit 1a and rear wheel brake circuit 1b, the first electromagnetic valve V1,V1' is open, the second electromagnetic valve V2,V2' is closed and the third electromagnetic valve V3,V3' is closed. Therefore, the electromagnetic valves V1,V1', V2,V2', and V3,V3' do not require any electric power.

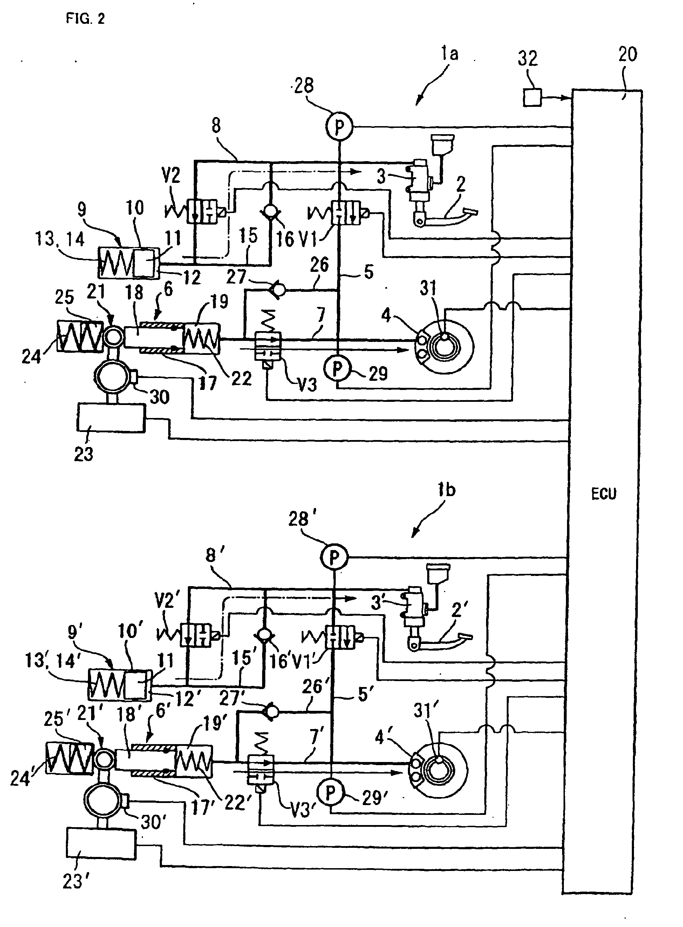

Then, when the rider operates the brake lever as the brake controller 2 for the front wheel, as shown in Fig. 2, in the front wheel brake circuit 1a, the first electromagnetic valve V1 closes and the second electromagnetic valve V2 and third electromagnetic valve V3 open. Therefore, the main brake passage 5 is disconnected from the master cylinder 3 by closing of the first electromagnetic valve V1 and at the same time the master cylinder 3 and the fluid loss simulator 9 are connected through the branch passage 8 and the main brake passage 5 by opening of the second electromagnetic valve V2, and the fluid loss modulator 6 and the brake caliper 4 are connected through the supply-drain passage 7 and the main brake passage 5 by opening of the third electromagnetic valve V3.

On the other hand, in the rear wheel brake circuit 1b as well, at the same time the first electromagnetic valve V1' closes and the second electromagnetic valve V2' and third electromagnetic valve V3' open. Therefore, the main brake passage 5' is disconnected from the master cylinder 3' by closing of the first electromagnetic valve V1' and at the same time the master cylinder 3' and the fluid loss simulator 9' are connected through the branch passage 8' and the main brake passage 5' by opening of the second electromagnetic valve V2', and the fluid loss modulator 6' and the brake caliper 4' are connected through the supply-drain passage 7' and the main brake passage 5' by opening of the third electromagnetic valve V3'.

This gives the rider brake feelings on the front and rear wheel sides which are virtually reproduced by the fluid loss simulators 9,9' in the front and rear wheel brake circuits 1a and 1b (see the chain line arrow in Fig. 2) and at the same time, change in fluid pressure due to operation of the hydraulic modulator 6,6' in each circuit is not transmitted to the rider because the first electromagnetic valve V1,V1' is closed. In parallel with this, the electric motor 23,23' for the hydraulic modulator 6,6' starts running and the cam mechanism 21,21' presses the piston 18,18' to pressurize the working fluid in the hydraulic chamber 19,19'. As a consequence, the fluid pressure depending on control of the electric motor 23,23' is supplied through the main brake passage 5,5' to the brake caliper 4,4' (see the solid line arrow in Fig. 2).

If the wheel speed sensor 31,31' detects that the slip ratio of the front wheel or rear wheel exceeds a prescribed value, the controller 20 controls the electric motor 23,23' to move the piston 18,18' back to reduce the braking pressure of the brake caliper 4,4' and control the slip ratio of the wheel properly by ABS control (CBS control + ABS control). At this time, the first electromagnetic valve V1,V1' is closed and the master cylinder 3,3' and the hydraulic modulator 6,6' are disconnected so that pressure change by ABS control is not transmitted to the rider's brake controller 2,2'.

The above explanation assumes a case that the brake controller 2,2' is operated but the ABS is inactive and the vehicle stops. However, even when the ABS is active and the vehicle stops, control is done in the same manner. In other words, when the ABS is active, it decreases, holds and again increases the pressure in the hydraulic chamber 19,19', and which is larger between the pressure of the master cylinder 3,3' and the pressure of the brake caliper 4,4' cannot be identified according to at which point the vehicle has stopped; therefore, by adjusting the current value determined by an input duty ratio, through PWM control of the electric motor 23,23' including its normal and reverse rotation, the position of the piston 18,18', which is determined by the rotational position of the cam mechanism 21,21', is electrically adjusted accurately, easily and freely, whether the adjustment is made to increase or decrease the pressure.

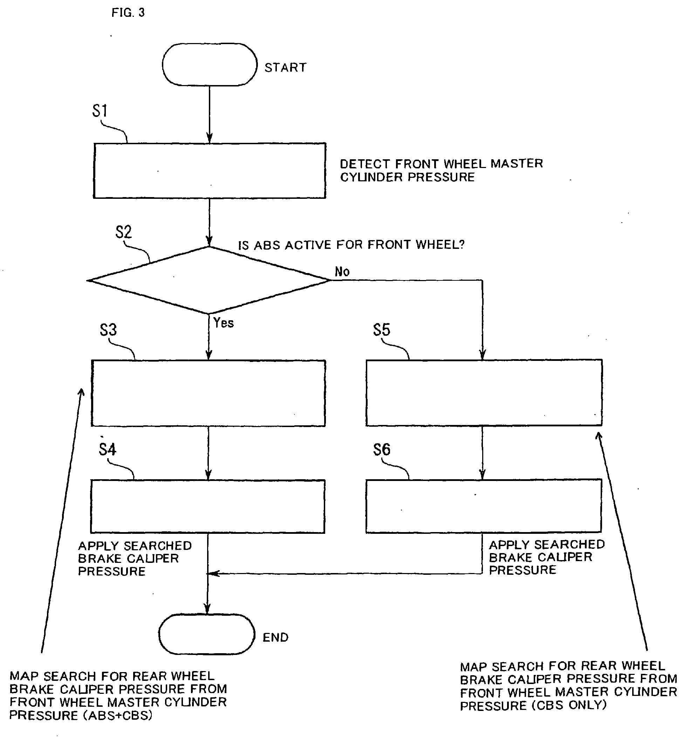

The fluid pressure ratio of the front wheel brake caliper 4 to the rear wheel brake caliper 4' is predetermined and this ratio differs depending on whether the ABS is active or inactive.
The flowchart in Fig. 3 shows a process that in braking the front wheel, the braking pressure ratio of the rear wheel against the front wheel is changed depending on whether ABS control is done on the front wheel side or not. Specifically, whether a given braking pressure should be left on the rear wheel or not is controlled here.
First, at step S1, the pressure in the front wheel master cylinder 3 is detected by the pressure sensor 28. The reason that the pressure in the front wheel master cylinder 3 is used as a reference pressure in this way is that the rider's intention to brake the vehicle should be accurately reflected, though eventually the fluid pressure in the master cylinder 3 is almost equal to the braking pressure of the front wheel brake caliper 4.

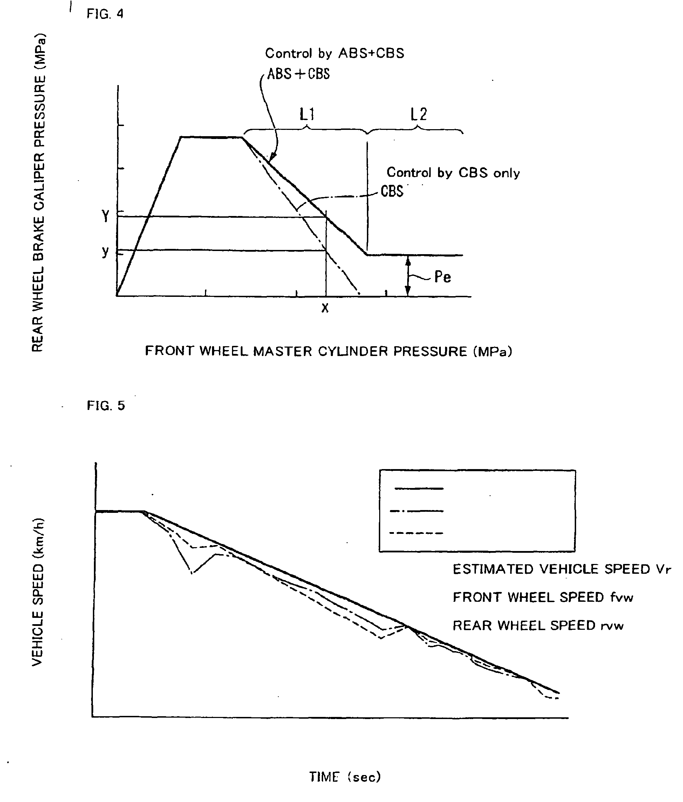

Fig. 4 shows change in the rear wheel brake caliper pressure (MPa) (vertical axis) determined depending on the front wheel master cylinder pressure (MPa) (horizontal axis) under CBS control. Here, the solid line represents a situation that ABS control.and CBS control are under way and the chain line shows a situation that only CBS control is under way (the ABS is inactive).

As shown in the figure, when the front wheel master cylinder pressure is gradually increased, at first the rear wheel brake caliper pressure gradually increases, then levels off; when the front wheel master cylinder pressure is further increased, the rear wheel brake caliper pressure gradually decreases, where the braking pressure ratio of the rear wheel brake caliper 4' to the front wheel master cylinder pressure under both ABS control and CBS control is different from that under CBS control only (the ABS is inactive).

In other words, in the zone of gradual decrease L1, as indicated by the solid line in Fig. 4, when the ABS is active, the ratio is set at Y/x (x: front wheel master cylinder pressure, Y: rear wheel brake caliper pressure) and as indicated by the chain line in Fig. 4, when the ABS is inactive, the ratio is set at y/x (x: front wheel master cylinder pressure, y: rear wheel brake caliper pressure); the ratio Y/x (the ABS is active) is larger than the ratio y/x (the ABS is inactive). Furthermore, in zone L2, while the rear wheel brake caliper pressure is finally set at zero when the ABS is inactive, there still remains a given braking pressure Pe when the ABS is active.

At step S3 in Fig. 3, whether the ABS is currently active on the front wheel side or not is decided. If it is decided at step S2 that the ABS is active, at step S3 the rear wheel brake caliper pressure corresponding to the front wheel master cylinder is searched from the solid line in the table of Fig. 4 indicating the ratio when the ABS is active; and at step S4 this brake caliper pressure is applied to the rear wheel brake caliper 4' through the hydraulic modulator 6' to end control. In applying the fluid pressure through the hydraulic modulator 6', the position of the piston 18' is controlled according to feedback from the pressure sensor 29'.

On the other hand, if it is decided at step S2 that the ABS is inactive, at step S5 the rear wheel brake caliper pressure corresponding to the front wheel master cylinder is searched from the chain line in the table of Fig. 4 indicating the ratio when the ABS is inactive; and at step S6 this brake caliper pressure is applied to the rear wheel brake caliper 4' through the hydraulic modulator 6' to end control.

Therefore, according to this embodiment, when a braking pressure is applied to the rear wheel brake caliper 4' in conjunction with operation of the front wheel brake controller 2, if the slip ratio of the front wheel exceeds a prescribed value, ABS control starts; as ABS control starts in this way, the vertical load of the rear wheel, which becomes higher in speed than the front wheel, tends to decrease to a larger extent; in this case, a brake caliper pressure is applied to the rear wheel at a larger ratio (Y/x (>y/x)) than the ratio (y/x) when ABS control is not done, and even in the period when braking is ended on the front wheel side, a given braking pressure Pe is left on the rear wheel brake caliper 4 and maintained and a rear wheel braking pressure is thus ensured. As a consequence, when the vertical load of the rear wheel tends to decrease to a larger extent, the brake feeling is good.

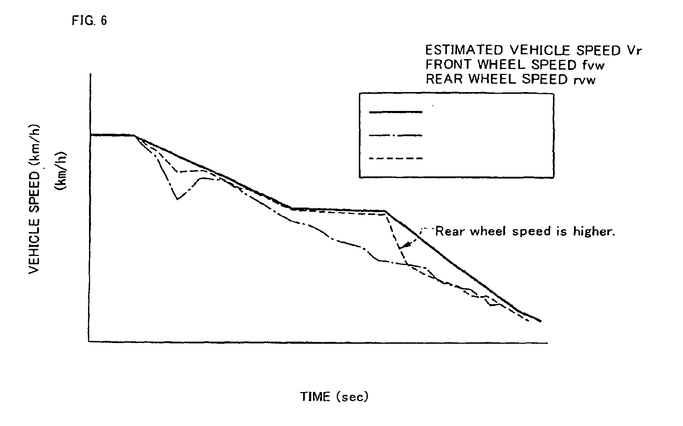

In other words, under ABS control, when the braking pressure ratio of the rear wheel brake caliper 4 to the front wheel master cylinder pressure is set at the same level as when the ABS is inactive, as shown in Fig. 6, the rear wheel speed (rvw) is higher than the front wheel speed (fvw) and the rear wheel vertical load tends to decrease to a larger extent and consequently only the front wheel must bear a large braking load and consequently the estimated vehicle speed (Vr) hardly goes down along with the rear wheel speed (rvw) and the brake feeling worsens; on the other hand, as shown in Fig. 5, as in this embodiment, the braking pressure ratio of the rear wheel is set at the level as mentioned above for a situation that the ABS is active, the estimated vehicle speed (Vr) goes down and a good brake feeling (for example, as in the embodiment) is obtained and also the rear wheel speed (rvw) and the front wheel speed (fvw) smoothly go down following the estimated vehicle speed (Vr). Fig. 5 and Fig. 6 show how the estimated vehicle speed Vr (solid line), front wheel speed fvw (chain line) and rear wheel speed rvw (broken line) change where the horizontal axis represents time (sec) and the vertical axis represents vehicle speed (km/h).
As explained above, a good brake feeling which corresponds to the rider's brake operation is obtained under ABS control when the rear wheel vertical load tends to decrease to a larger extent.
2,2' ... Brake controller
3,3' ... Master cylinder
4,4' ... Brake caliper (wheel braking means)
28,28' ... Pressure sensor (sensor)
Pe ... Given braking pressure

## Claims

1. An ABS motorcycle braking device in which wheel braking means (4') for a rear wheel works in conjunction with brake operation for a front wheel,
**characterized by**
- means which are designed to:
when the braking pressure of a wheel braking means (4) for the front wheel interlocked with a front wheel brake controller (2) is gradually increased, to gradually increase and then decrease the braking pressure allocated to the wheel braking means (4') for the rear wheel and electrically switching for finally controlling whether a given braking pressure (Pe) is left on the rear wheel or not by electrical switching,
whereby the rear wheel brake caliper pressure is finally set to zero when the ABS is inactive on the front wheel side, and there still remains the given braking pressure (Pe) when the ABS is active on the front wheel side.

2. A motorcycle braking device in which a wheel braking means (4') for a rear wheel works in conjunction with brake operation for a front wheel and equipped with an ABS
**characterized in that**
when the ABS is active on the side of the front wheel which is braked by operation of a front wheel brake controller (2), the braking pressure ratio between the wheel braking means (4) for the front wheel and the wheel braking means (4') for the rear wheel is different from that when the ABS is inactive.

3. The motorcycle braking device as described in any of the preceding claims, **characterized in that** when the ABS is active on said front wheel side, the braking pressure of the wheel braking means (4') for the rear wheel is higher than when the ABS is inactive.

4. The motorcycle braking device as described in any of Claims 1 to 3, **characterized in that** the pressure of a master cylinder (3) interlocked with the brake controller (2) is detected by a sensor and a fluid pressure applied to the wheel braking means (4) is electrically adjusted according to the detected pressure.

5. A method for operating an ABS motorcycle braking device in which a wheel braking means (4') for a rear wheel works in conjunction with brake operation for a front wheel,
**characterized in that**
when the braking pressure of a wheel braking means (4) for the front wheel interlocked with a front wheel brake controller (2) is gradually increased; the braking pressure allocated to the wheel braking means (4') for the rear wheel is gradually increased and then decreased and finally whether a given braking pressure (Pe) is left on the rear wheel or not is controlled by electrical switching,
whereby the rear wheel brake caliper pressure is finally set to zero when the ABS is inactive on the front wheel side, and there still remains the given braking pressure (Pe) when the ABS is active on the front wheel side.

6. A method for operating an ABS motorcycle braking device in which a wheel braking means (4') for a rear wheel works in conjunction with brake operation for a front wheel,
**characterized in that**
when the ABS is active on the side of the front wheel which is braked by operation of a front wheel brake controller (2), the braking pressure ratio between the wheel braking means (4) for the front wheel and the wheel braking means (4') for the rear wheel is different from that when the ABS is inactive.

## Patentansprüche

1. ABS-Motorradbremsvorrichtung, bei der ein Radbremsmittel (4') für ein Hinterrad zusammen mit der Bremsbetätigung für ein Vorderrad arbeitet,
**gekennzeichnet durch**
Mittel, die ausgelegt sind:
wenn der Bremsdruck eines mit einem Vorderradbremssteller (2) ineinander greifenden Radbremsmittels (4) für das Vorderrad allmählich erhöht wird, den dem Radbremsmittel (4') für das Hinterrad bereitgestellten Bremsdruck allmählich zu erhöhen und dann zu verringern und schließlich **durch** elektrisches Schalten zu steuern, ob ein vorgegebener Bremsdruck (Pe) an dem Hinterrad belassen wird oder nicht,
wodurch der Hinterradbremssatteldruck schließlich auf Null gestellt wird, wenn das ABS auf der Vorderradseite nicht aktiv ist und der vorgegebene Bremsdruck (Pe) noch erhalten wird, wenn das ABS auf der Vorderradseite aktiv ist.

2. Motorradbremsvorrichtung, bei der ein Radbremsmittel (4') für ein Hinterrad zusammen mit der Bremsbetätigung für ein Vorderrad arbeitet und mit einem AB S ausgestattet ist,
**dadurch gekennzeichnet, dass,**
wenn das ABS auf der Seite des Vorderrads, das durch Betätigung eines Vorderradbremsstellers (2) gebremst wird, aktiv ist, das Bremsdruckverhältnis zwischen dem Radbremsmittel (4) für das Vorderrad und dem Radbremsmittel (4') für das Hinterrad verschieden ist von jenem, wenn das ABS nicht aktiv ist.

3. Motorradbremsvorrichtung gemäß einem der vorhergehenden Ansprüche,
**dadurch gekennzeichnet, dass,**
wenn das ABS auf der Vorderradseite aktiv ist, der Bremsdruck des Radbremsmittels (4') für das Hinterrad größer ist, als wenn das ABS nicht aktiv ist.

4. Motorradbremsvorrichtung gemäß einem der vorhergehenden Ansprüche,
**dadurch gekennzeichnet, dass**
der Druck eines mit dem Bremssteller (2) ineinander greifenden Hauptzylinders (3) durch einen Sensor detektiert wird und ein an dem Radbremsmittel (4) aufgebrachter Flüssigkeitsdruck elektrisch entsprechend dem detektierten Druck eingestellt wird.

5. Verfahren zum Betrieb einer ABS-Motorradbremsvornchtung, bei der ein Radbremsmittel (4') für ein Hinterrad zusammen mit der Bremsbetätigung für ein Vorderrad arbeitet,
**dadurch gekennzeichnet, dass,**
wenn der Bremsdruck eines mit einem Vorderradbremssteller (2) ineinander greifenden Radbremsmittels (4) für das Vorderrad allmählich erhöht wird, der dem Radbremsmittel (4') für das Hinterrad bereitgestellte Bremsdruck allmählich erhöht und dann verringert wird und schließlich durch elektrisches Schalten gesteuert wird, ob ein vorgegebener Bremsdruck (Pe) an dem Hinterrad belassen wird oder nicht,
wodurch der Hinterradbremssatteldruck schließlich auf Null gestellt wird, wenn das ABS auf der Vorderradseite nicht aktiv ist und der vorgegebene Bremsdruck (Pe) noch erhalten wird, wenn das ABS auf der Vorderradseite aktiv ist.

6. Verfahren zum Betrieb einer ABS-Motorradbremsvorrichtung, bei der ein Radbremsmittel (4') für ein Hinterrad zusammen mit der Bremsbetätigung für ein Vorderrad arbeitet,
**dadurch gekennzeichnet, dass,**
wenn das ABS auf der Seite des Vorderrads, das durch Betätigung eines Vorderradbremsstellers (2) gebremst wird, aktiv ist, das Bremsdruckverhältnis zwischen dem Radbremsmittel (4) für das Vorderrad und dem Radbremsmittel (4') für das Hinterrad verschieden ist von jenem, wenn das ABS nicht aktiv ist.

## Revendications

1. Dispositif de freinage ABS pour motocycle, dans lequel des moyens de freinage de roue (4'), pour une roue arrière, fonctionnent conjointement avec le fonctionnement en freinage d'une roue avant,
**caractérisé par**
des moyens, conçus pour :
lorsque la pression de freinage des moyens de freinage de roue (4) pour la roue avant, à action combinée avec un contrôleur de frein de roue avant (2), est graduellement augmentée, pour graduellement augmenter puis diminuer la pression de freinage allouée aux moyens de freinage de roue (4') pour la roue arrière, et effectuer une commutation électrique, pour finalement commander le maintien ou non d'une pression de freinage (Pe) donnée sur la roue arrière, par une commutation électrique,
de sorte que la pression à l'étrier de frein de roue arrière soit finalement fixée à zéro, lorsque l'ABS est inactif sur le côté roue avant, et que la pression de freinage (Pe) donnée subsiste, lorsque l'ABS est actif sur le côté roue avant.

2. Dispositif de freinage pour motocycle, dans lequel des moyens de freinage de roue (4'), pour une roue arrière, fonctionnent conjointement avec le fonctionnement en freinage d'une roue avant et équipé d'un ABS,
**caractérisé en ce que**
lorsque l'ABS est actif sur le côté roue avant qui est freiné par le fonctionnement d'un contrôleur de frein de roue avant (2), le rapport des pressions de freinage, entre les moyens de freinage de roue (4) pour la roue avant et les moyens de freinage de roue (4') pour la roue arrière, est différent de ce qu'il est lorsque l'ABS est inactif.

3. Dispositif de freinage pour motocycle, tel que décrit dans l'une quelconque des revendication précédentes, **caractérisé en ce que** lorsque l'ABS est actif sur ledit côté roue avant, la pression de freinage des moyens de freinage de roue (4') pour la roue arrière, est supérieure de ce qu'elle est lorsque l'ABS est inactif.

4. Dispositif de freinage pour motocycle, tel que décrit dans l'une quelconque des revendications 1 à 3, **caractérisé en ce que** la pression d'un maître cylindre (3), à action combinée avec le contrôleur de frein (2),est détectée par un capteur, et une pression de fluide, appliquée aux moyens de freinage de roue (4), est ajustée électriquement selon la pression détectée.

5. Procédé de fonctionnement d'un dispositif de freinage pour motocycle, dans lequel des moyens de freinage de roue (4'), pour une roue arrière, fonctionnent conjointement avec le fonctionnement en freinage d'une roue avant,
**caractérisé en ce que**
lorsque la pression de freinage de moyens de freinage de roue (4) pour la roue avant, à action combinée avec un contrôleur de frein de roue avant (2), est graduellement augmentée, la pression de freinage allouée aux moyens de freinage de roue (4') pour la roue arrière est graduellement augmentée, puis diminuée et, enfin, le maintien ou non d'une pression de freinage (Pe) donnée sur la roue arrière est commandé par une commutation électrique,
de sorte que la pression à l'étrier de frein de roue arrière soit finalement fixée à zéro, lorsque l'ABS est inactif sur le côté roue avant, et que la pression de freinage (Pe) donnée subsiste, lorsque l'ABS est actif sur le côté roue avant.

6. Procédé de fonctionnement d'un dispositif de freinage ABS pour motocycle, dans lequel des moyens de freinage de roue (4'), pour une roue arrière, fonctionnent conjointement avec le fonctionnement en freinage d'une roue avant,
**caractérisé en ce que,**
lorsque l'ABS est actif sur le côté roue avant qui est freiné par le fonctionnement d'un contrôleur de frein de roue avant (2), le rapport des pressions de freinage, entre les moyens de freinage de roue (4) pour la roue avant et les moyens de freinage de roue (4') pour la roue arrière, est différent de ce qu'il est lorsque l'ABS est inactif.
